# EUROPÄISCHE PATENTSCHRIFT

(11) **EP 0 590 435 B1**
(45) Veröffentlichungstag und Bekanntmachung des Hinweises auf die Patenterteilung: **19.02.1997**
(21) Anmeldenummer: 93114967.8
(22) Anmeldetag: 16.09.1993
(51) Int. Cl.: H02H 3/33

(54) **Allstromsensitive Fehlerstromerfassungseinrichtung mit von Gleichfehlerstrom unbeeinflussbarer Wechsel- und Pulsfehlerstromerfassungseinrichtung**
Fault current acquiring device, responding to any current, with alternating or pulsating fault current acquiring device, unaffected by DC fault currents
Dispositif d'acquisition de courant de défaut, répondant à tout courant avec acquisition de courant de défaut alternatif ou pulsatoire, indifférents aux courants de défaut continus

(30) Priorität: 01.10.1992 DE 4233104
(43) Veröffentlichungstag der Anmeldung: 06.04.1994
(73) Patentinhaber: SIEMENS AKTIENGESELLSCHAFT, 80333 München (DE)
(72) Erfinder: Bauer, Bernhard, Dipl.-Ing. (FH), D-93053 Regensburg (DE); Kleemeier, Manfred, Dipl.-Ing. (FH), D-93073 Neutraubling (DE)

(56) Entgegenhaltungen:
- EP-A- 0 349 880
- EP-A- 0 490 123
- DE-C- 2 348 881
- US-A- 3 978 400

## Beschreibung

Die Erfindung betrifft eine Fehlerstromerfassungseinrichtung mit einem puls- und wechselstromsensitiven Fehlerstromschutzschalter oder Differenzstromschalter (5) und mit einem gleichstromsensitiven Differenzstromschalter (6), wobei der puls- und wechselstromsensitive Fehlerstromschutzschalter oder Differenzstromschalter (5) eine Summenstromwandleranordnung (1) mit mindestens zwei Primärwicklungen (2) für einen zu überwachenden Stromkreis aufweist und eine Sekundärwicklung (3) enthält.

Eine gattungsgemäße Fehlerstromerfassungseinrichtung ist in der DE-C3-23 48 881 offenbart. Diese umfaßt zwei Summenstromwandleranordnungen, von denen die erste in an sich bekannter Weise darauf abgestimmt ist, außer bei Wechselstrom auch bei pulsierendem Gleichstrom auszulösen. Auf diesen Auslösewert ist annähernd das Auslöseverhalten bei Gleichstrom des zweiten Summenstromwandlers abgestimmt. Der Magnetkern des ersten Summenstromwandlers hat einen so großen Induktionshub, daß die durch einen pulsierenden Gleichfehlerstrom in einer Primärwicklung in der Sekundärwicklung induzierte Spannung zum Betätigen des Auslösemagneten ausreicht. Nach diesem Prinzip läßt sich erreichen, daß bei Wechselstrom und pulsierendem Gleichstrom der Schalter bei etwa gleichen Effektivwerten auslöst.

Fehlerstromerfassungseinrichtungen finden bei Fehlerstromschutzschaltern (FI-Schutzschalter) mit netzspannungsunabhängiger Auslösung und bei Differenzstromschaltern (DI-Schalter) mit netzspannungsabhängiger Auslösung Anwendung. Bei den Fehlerstromschutzschaltern besteht keine galvanische Verbindung zwischen dem Auslösekreis des Schutzschalters und dem elektrischen Versorgungsnetz. Sie sind geeignet zur Auslösung bei Wechselfehlerströmen und pulsierenden Gleichfehlerströmen. Netzunabhängige Schaltungen, wie sie beim Fehlerstromschutzschalter verwendet werden, können wegen des transformatorischen Auslöseprinzipes Fehlerströme in Form von geglätteten Gleichströmen nicht erkennen. Hierfür wurde ein Differenzstromschalter entwickelt, der zur Erfassung der geglätteten Gleichströme Elektronikschaltungen beinhaltet, die der Versorgung durch die Netzspannung bedürfen.

Ein seit langem bekanntes Problem ergibt sich für langsam ansteigende glatte Gleichdifferenzströme. Diese werden vom FI- und DI-Schalter, der nach dem Induktionsprinzip arbeitet, nicht erfaßt, da glatte Gleichdifferenzströme keinen zeitlich veränderlichen Fluß im Summenstromwandler erzeugen. Die Auslöseeinrichtung spricht in diesem Fall nicht an. Glatte Gleichdifferenzströme bewirken eine Vormagnetisierung des Summenstromwandlers, was schon bei kleinen Gleichdifferenzströmen zu einem Unempfindlichwerden des Summenstromwandlers für Wechselfehlerströme und pulsierende Gleichfehlerströme führt. Verschiedene Maßnahmen zur Lösung dieses Problems liegen bereits vor.

In der EP-0 349 880 ist eine Einrichtung zum Schutz vor Fehlerströmen beschrieben, die einen Fehlerstromschutzschalter sowie einen Differenzstromschalter umfaßt. Der Fehlerstromschutzschalter ist auf das Ansprechen bei Wechsel- und pulsierenden Gleichfehlerströmen ausgelegt, während der Differenzstromschalter bei Fehlerströmen aus Gleichstrom, Wechselstrom und pulsierenden Gleichfehlerströmen anspricht. Die Empfindlichkeit zur Auslösung des letzteren ist so auf den Fehlerstromschutzschalter abgestimmt, daß der Differenzstromschalter bei Wechselfehlerströmen und pulsierenden Fehlerströmen im wesentlichen oberhalb der des Fehlerstromschutzschalters auslöst. Die Auslösung bei Fehlerströmen aus glatten Gleichstrom entspricht der Empfindlichkeit des Fehlerstromschutzschalters bei Wechselfehlerstrom bzw. bei pulsierenden Fehlerströmen. Dies hat zur Folge, daß der Differenzstromschalter, sofern glatte Gleichfehlerströme auftreten, die Schutzfunktion der gesamten Einrichtung übernimmt, da in diesem Fall der Fehlerstromschutzschalter durch die gleichstrombedingte Vormagnetisierung nicht mehr auslösen kann.

Bei einer anderen Lösung gemaß der noch unveröffentlichten deutschen Patentanmeldung P 42 15 184.8 hat der FI- bzw. DI-Schalter einen Ringkern mit einem Luftspalt, in dem eine Feldplatte angeordnet ist. Bei Auftreten eines Fehlerstromes ändert sich der magnetische Fluß im Ringkern und bewirkt in der Feldplatte eine flußabhängige Zustandsanderung. Durch eine geeignete Vormagnetisierung des Ringkernes wird der Arbeitspunkt in den linearen Bereich der Widerstands-Induktions-Kennlinie der Feldplatte gelegt, in dem Gleichfehlerströme das Auslöseverhalten für Wechsel fehlerströme nicht beeinträchtigen.

Der Erfindung liegt die Aufgabe zugrunde, eine Fehlerstromerfassungseinrichtung der oben genannten Art auf einfache Weise zu ergänzen, so daß ein für auftretende Gleichfehlerströme verbessertes Auslöseverhalten erreicht wird. Diese Aufgabe wird dadurch gelöst, daß der puls- und wechselstromsensitive Fehlerstromschutzschalter oder Differenzstromschalter Mittel aufweist, die über einen weiteren Feldstärkebereich eine von Gleichstromvormagnetisierungen nahezu unabhängige relative Permeabilität bewirken, z.B. eine Bürde, die parallel zur Sekundärwicklung geschaltet ist, und daß die Mittel bewirken, daß die Auslösung des puls- und wechselstromsensitiven Fehlerstromschutzschalters oder des Differenzstromschalters bei etwa gleichen Induktionshüben unabhängig von der Höhe des Gleichfehlerstroms erfolgt, der aufgrund des Ansprechbereichs des gleichstromsensitiven Differenzstromschalters fließen kann.

Eine vorteilhafte Weiterbildung der Erfindung besteht, wenn die Nennfehlerströme I_{Δn}∼ und I_{Δn}― für beide Schutzschalter unabhängig voneinander einstellbar sind und wenn Mittel zur automatischen Anpassung der relativen Permeabilität des puls- und wechselstromsensitiven Fehlerstromschutzschalters oder Differenzstromschalters an die beiden Einstellwerte für die Nennfehlerströme I_{Δn}∼ und I_{Δn}― vorgesehen sind, z.B. eine Bürde, die parallel zur Sekundärwicklung geschaltet ist.

Ein Ausführungsbeispiel der Erfindung ist nachfolgend anhand einer Zeichnung näher erläutert. Es zeigen:
- FIG 1: ein Prinzipschaltbild einer erfindungsgemäßen Fehlerstromerfassungseinrichtung,
- FIG 2: ein Diagramm mit prinzipiellem Verlauf der Magnetisierungskurve ohne und mit Bürdung der Sekundärwicklung des Summenstromwandlers,
- FIG 3: ein Diagramm mit den prinzipiellen Verläufen von Magnetisierungskurven im Bereich kleiner Erregung ohne und mit mäßiger Bürdung sowie ohne Gleichfehlerstrom und mit niedrigem Gleichfehlerstrom,
- FIG 4: ein Diagramm mit den zu den Magnetisierungskurven gemäß FIG 3 zugehörigen Induktionshüben,
- FIG 5: ein Diagramm mit den prinzipiellen Verläufen von Magnetisierungskurven ohne Bürdung sowie ohne und mit hohem Gleichfehlerstrom,
- FIG 6: ein Diagramm mit den zu den Magnetisierungskurven gemäß FIG 5 zugehörigen Induktionshüben,
- FIG 7: ein Diagramm mit den prinzipiellen Verläufen von Magnetisierungskurven mit starker Bürdung sowie ohne und mit hohem Gleichfehlerstrom,
- FIG 8: ein Diagramm mit den zu den Magnetisierungskurven gemäß FIG 7 zugehörigen Induktionshüben und
- FIG 9: eine Einheit zum Schutz vor Wechselfehlerströmen, pulsförmigen Fehlerströmen und Gleichfehlerströmen.

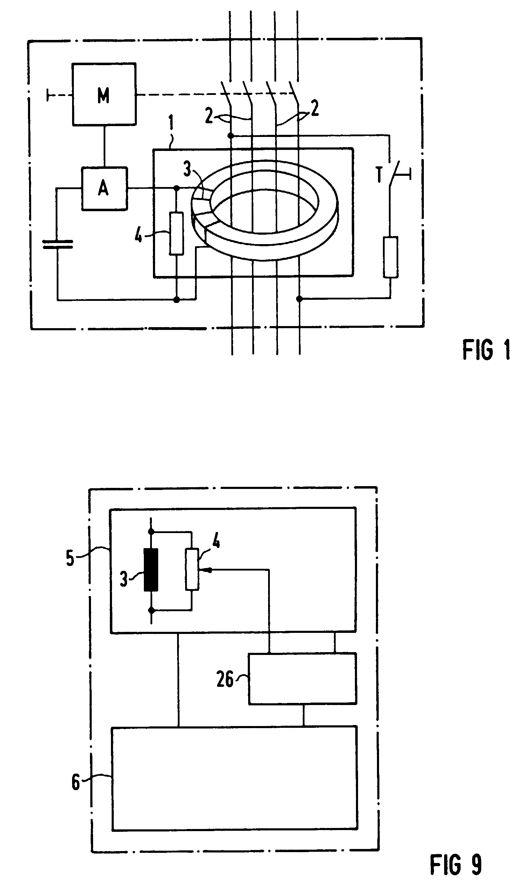

In der FIG 1 ist ein Fehlerstromschutzschalter mit einer eine Summenstromwandleranordnung 1 aufweisenden erfindungsgemäßen Fehlerstromerfassungseinrichtung dargestellt, die durch einen Ringkern geführte Stromleiter 2 als Primärwicklungen, eine auf den Ringkern angeordnete Sekundärwicklung 3 und eine zu dieser parallel geschaltete Bürde 4 umfaßt. Die weiteren in der FIG 1 dargestellten Elemente des Fehlerstromschutzschalters, wie z.B. der von der Sekundärwicklung gespeiste Auslöser A, die Mechanik M und die Prüfeinrichtung T bedürfen hier keiner weiteren Erläuterung, da sie hinlänglich bekannt sind.

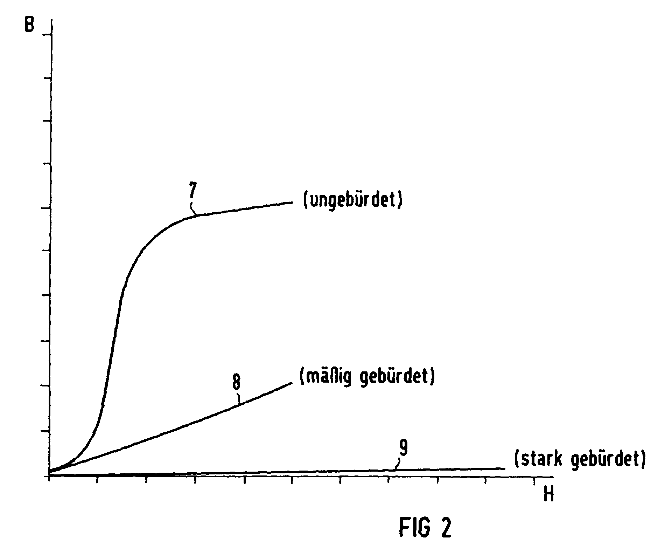

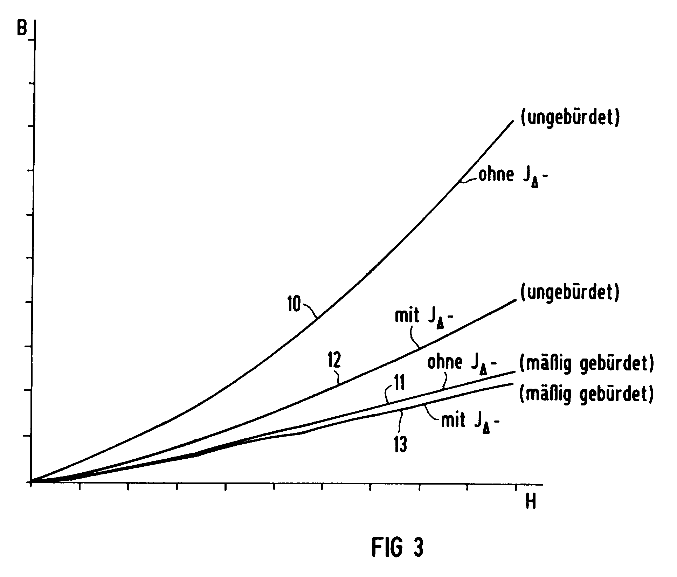

Das eingangs geschilderte Problem der Vormagnetisierung des Wandlerkerns durch Gleichfehlerströme wird bei dieser Schaltung durch die Bürdung der Sekundärwicklung 3, d.h. der Parallelschaltung eines ohmschen Widerstandes 4 gelöst. Durch die Bürdung wird, wie in FIG 2 dargestellt, die Magnetisierungskennlinie geschert. Gegenüber der ungebürdeten Magnetisierungskennlinie gemäß Kurve 7 ergeben sich die wesentlich flacheren aber dafür verhältnismäßig linear verlaufenden Kurven 8 für mäßige und 9 für starke Bürdung. Im Diagramm nach FIG 2 ist wie üblich für die Darstellung von Magnetisierungskennlinien auf der Abszisse die Erregung H, auf der Ordinate die Induktion B aufgetragen. Dieselbe Bezeichnung gilt auch für die folgenden Diagramme gemaß den FIG 3 bis 8, mit denen die unterschiedliche Wirkung von Gleichfehlerströmen bei mehr oder weniger starker Bürdung verdeutlicht wird.

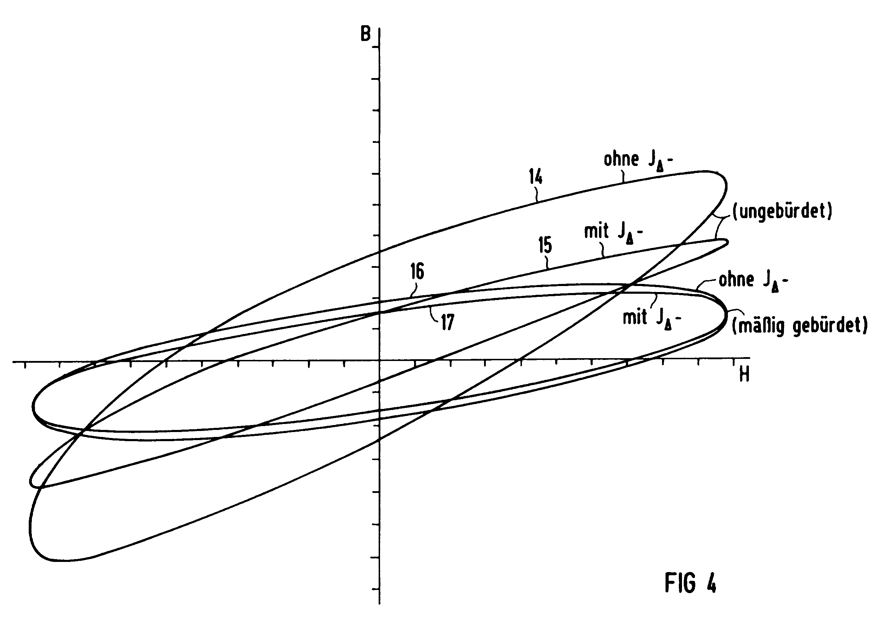

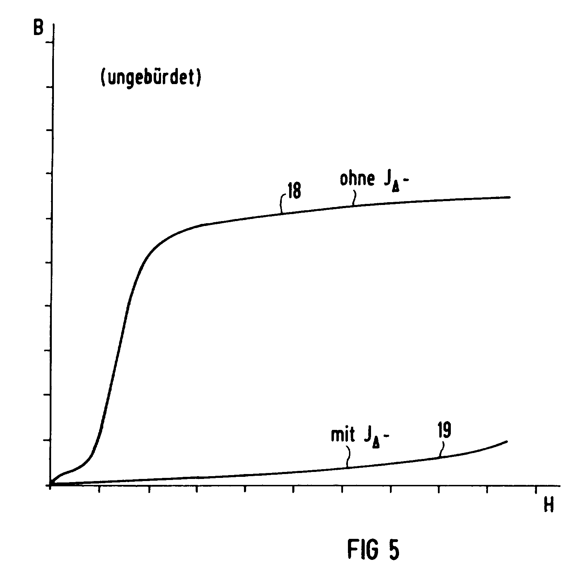

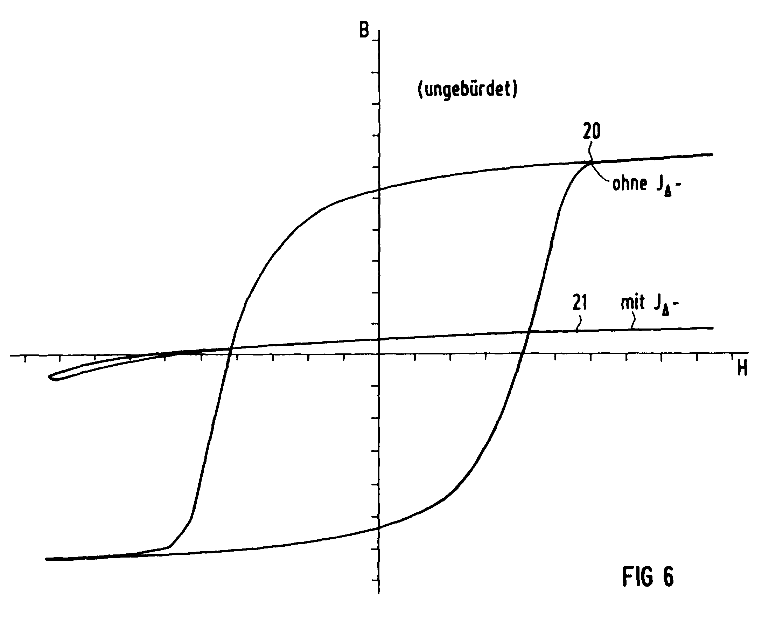

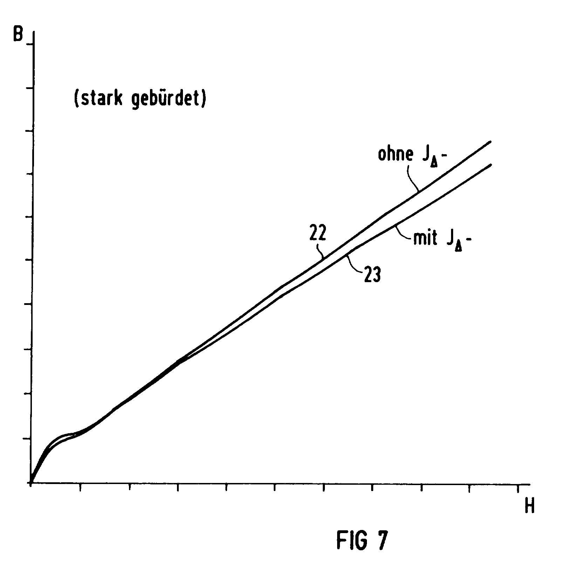

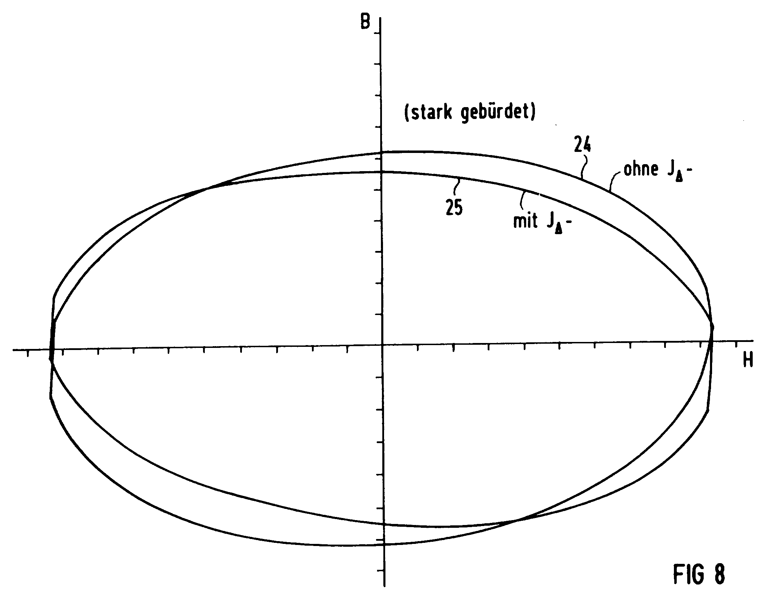

In FIG 3 sind mehrere Verläufe von Magnetisierungskennlinien im Bereich geringer magnetischer Feldstärke H, d.h. nur ein zu FIG 2 vergleichsweise kleiner Ausschnitt um den Nullpunkt dargestellt. Dabei entsprechen die Kurven 10 und 11 im Fall nicht vorhandener Gleichfehlerströme gemäß FIG 3 den Kurven 7 und 8 in FIG 2. Bei Auftreten geringer Gleichfehlerströme verschieben sich die Magnetisierungskurven und es ergeben sich die Kurve 12 für den ungebürdeten und die Kurve 13 für den gebürdeten Fall. FIG 4 veranschaulicht die Induktionshübe für die in FIG 3 betrachteten Fälle. Darin ist deutlich der Unterschied der Induktionshübe für den ungebürdeten Fall bei Nichtauftreten eines Gleichfehlerstromes gemäß Kurve 14 und bei Auftreten des Gleichfehlerstromes gemäß Kurve 15 zu erkennen. Die entsprechenden Kurven 16 und 17 bei mäßiger Bebürdung zeigen dagegen nahezu gleiche Induktionshübe, so daß sich hierfür unabhängig vom Auftreten des Gleichfehlerstromes etwa gleiche Auslösewerte für eine Auswerteschaltung ergeben würden. Unterschiede in den Induktionshüben von etwa 10 % sind in der Praxis noch zulässig, um die geforderten Auslösegrenzen einzuhalten. Gegenüber dem vorangehenden Fall wird nun der Einfluß eines hohen Gleichfehlerstromes auf die Magnetisierungskennlinie im ungebürdeten Fall betrachtet. In FIG 5 ist hierzu die Magnetisierungskurve 18 bei Nichtauftreten eines Gleichfehlerstromes dargestellt, die der Kurve 7 in FIG 2 entspricht, sowie die Kurve 19 für den Fall eines auftretenden hohen Gleichfehlerstromes. FIG 6 zeigt für die beiden Fälle gemäß FIG 5 stark unterschiedliche Induktionshübe gemäß den Kurven 20 und 21. Der Betrieb einer Fehlerstromschutzeinrichtung mit solch unterschiedlichen Auslösewerten ist nicht möglich. Eine deutliche Verbesserung der Auslösebedingungen ergibt sich für einen hohen Gleichfehlerstrom, wenn eine starke Bürdung, wie in den FIG 7 und 8 dargestellt, vorgesehen wird. Die Kurven für die Magnetisierung ohne 22 und mit 23 diesem Gleichfehlerstrom liegen nun gemäß FIG 7 nahe beieinander, was zu entsprechend gut übereinstimmenden Induktionshüben gemäß FIG 8 führt. Hierin entspricht die Kurve 24 dem Fall ohne und die Kurve 25 dem Fall mit hohem Gleichfehlerstrom. Dies bedeutet, daß durch entsprechend starke Bebürdung selbst bei hohen Gleichfehlerströmen wiederum für gleiche Auslösewerte gesorgt werden kann. Allerdings hat eine stärkere Bebürdung Einbußen beim absoluten Induktionshub zur Folge. Bei konstantem Wechselfehlerstrom wird das Ausgangssignal an der Sekundärwicklung 3 gemäß FIG 1 umsomehr reduziert, je niederohmiger die Bürde bei gegebener Windungszahl und Wandlerdaten ist. Es ist daher anzustreben, die Bürde einerseits so hochohmig zu dimensionieren, daß andererseits der durch pulsierende Gleich- und Wechselfehlerströme erzeugte Induktionshub bei Arbeitspunktverschiebungen aufgrund überlagerter Gleichfehlerströme nicht unzulässig beeinflußt wird. Diese Forderung ergibt sich im Zusammenhang mit Einrichtungen zum Schutz vor Fehlerströmen gemäß FIG 9. In dieser Einrichtung sind ein puls- und wechselstromsensitiver Fehlerstromschutzschalter oder Differenzstromschalter 5 und ein gleichstromsensitiver Differenzstromschalter 6 in Reihe geschaltet. Die Bebürdung der Sekundärwicklung 3 durch einen ohmschen Widerstand 4 beim Fehlerstromschutzschalter oder Differenzstromschalter 5 ist angedeutet. Weiterhin ist eine Einstelleinheit 26 dargestellt, die mit den beiden Schutzschaltern 5 und 6 in Verbindung steht und durch die je nach Ausführung der Nennfehlerstrom I_{Δn}∼ des Schutzschalters 5 gekoppelt oder getrennt mit dem Nennfehlerstrom I_{Δn}― des Schutzschalters 6 eingestellt werden kann. Bei gekoppelter Einstellung der Nennfehlerströme auf einen Nennwert von beispielsweise I_{Δn} = 30 mA kann als glatter Gleichfehlerstrom (bei Einhaltung der Forderung, daß der Auslösegleichfehlerstrom innerhalb der Grenzen ≥ 0.5 I_{Δn} und ≤ 2 I_{Δn} liegt) maximal 60 mA auftreten, weil dann zwangsläufig der auf I_{Δn}― = 30 mA eingestellte Schutzschalter 6 auslösen muß. Dieser als noch relativ gering anzusehende Gleichfehlerstromwert würde nur einer entsprechend niedrigen Bebürdung bedürfen, wie sie in den FIG 3 bzw. 4 durch die Kurven 11, 13, 16 und 17 wiedergegeben ist. Demgegenüber wäre bei unabhängiger Einstellung der Nennfehlerströme auch der ungünstige Fall denkbar, daß der Gleichfehlerstrom beispielsweise I_{Δn}― = 3 A beträgt, während der Wechselfehlerstrom bzw. der pulsierende Fehlerstrom auf z.B. I_{Δn}∼ = 30 mA eingestellt ist. Wenn die Auslösung erst beim doppelten Nennwert des Gleichfehlerstromes, d.h. bei 6 A, stattfindet, wird bis zum Erreichen dieses Wertes der Wandler des wechsel- bzw. pulsstromsensitiven Fehlerstromschutzschalters viel stärker gleichstromvormagnetisiert. Dieser Fall entspricht den in FIG 5 und 6 durch die Kurven 19 und 21 dargestellten Verläufen für die Magnetisierung und den Induktionshub. Um auch hier unabhängig vom Auftreten des Gleichfehlerstromes etwa gleiche Induktionshübe zu erreichen, ist eine stärkere Bebürdung erforderlich, für die z.B. die in den in FIG 7 und 8 dargestellten Kurvenverläufe 23 und 25 gelten.

Die in den FIG 2 bis 8 dargestellten Kurvenverläufe gelten zwar für berechnete Beispiele, jedoch soll hier nur qualitativ der Einfluß unterschiedlicher Bebürdung und die damit gegebene Möglichkeit verdeutlicht werden, die Auslösewerte je nach Höhe des auftretenden Gleichfehlerstromes innerhalb eines Toleranzbereiches zu halten.

Eine Vereinfachung der Einheit nach FIG 9 kann bei getrennt voneinander durch die Einstelleinheit 26 einstellbaren Nennfehlerströmen I_{Δn}∼ und I_{Δn}― darin bestehen, daß dieser eine Steuereinheit zugeordnet wird, die in angedeuteter Weise automatisch die richtige Bebürdung durch Steuerung des Widerstandes 4 vornimmt.

Neben der oben erwähnten Bebürdung mit einem ohmschen Widerstand 4 gibt es weitere Möglichkeiten, die Magnetisierungskennlinie zu scheren. Dies wird auch mit einer zusätzlichen Kurzschlußwicklung auf dem Summenstromwandler oder mit einer Bürde parallel zu einer Tertiarwicklung des Summenstromwandlers erreicht. Weiterhin läßt sich z.B. ein Luftspalt im Summenstromwandler vorsehen oder die Materialeigenschaften des Summenstromwandlers werden so eingestellt, daß die Magnetisierungskennlinie geschert ist, d.h. die relative Permeabilität ist über einen weiteren Feldstarkebereich nahezu unabhängig von Gleichstromvormagnetisierungen.

## Patentansprüche

1. Fehlerstromerfassungseinrichtung mit einem puls- und wechselstromsensitiven Fehlerstromschutzschalter oder Differenzstromschalter (5) und mit einem gleichstromsensitiven Differenzstromschalter (6), wobei der puls- und wechselstromsensitive Fehlerstromschutzschalter oder Differenzstromschalter (5) eine Summenstromwandleranordnung (1) mit mindestens zwei Primärwicklungen (2) für einen zu überwachenden Stromkreis aufweist und eine Sekundärwicklung (3) enthält, **dadurch gekennzeichnet,** daß der puls- und wechselstromsensitive Fehlerstromschutzschalter oder Differenzstromschalter (5) Mittel aufweist, die über einen weiteren Feldstärkebereich eine von Gleichstromvormagnetisierungen nahezu unabhängige relative Permeabilität bewirken, z.B. eine Bürde (4), die parallel zur Sekundärwicklung (3) geschaltet ist, und daß die Mittel bewirken, daß die Auslösung des puls- und wechselstromsensitiven Fehlerstromschutzschalters oder des Differenzstromschalters (5) bei etwa gleichen Induktionshüben unabhängig von der Höhe des Gleichfehlerstroms erfolgt, der aufgrund des Ansprechbereichs des gleichstromsensitiven Differenzstromschalters (6) fließen kann.

2. Fehlerstromerfassungseinrichtung nach Anspruch 1,
**dadurch gekennzeichnet,** daß die Nennfehlerströme I_{Δn}∼ und I_{Δn}― für beide Schutzschalter (5,6) unabhängig voneinander einstellbar sind, und daß Mittel zur automatischen Anpassung der relativen Permeabilität des puls- und wechselstromsensitiven Fehlerstromschutzschalters oder Differenzstromschalters (5) an die beiden Einstellwerte für die Nennfehlerströme I_{Δn}∼ und I_{Δn}― vorgesehen sind, z.B. eine Bürde (4), die parallel zur Sekundärwicklung (3) geschaltet ist.

## Claims

1. Fault-current detection device having an earth-leakage circuit-breaker or residual-current circuit-breaker (5) affected by pulsating and alternating current, and having a residual-current circuit-breaker (6) affected by direct current, wherein the earth-leakage circuit-breaker or residual-current circuit-breaker (5) affected by pulsating and alternating current has a summation current transformer arrangement (1) having at least two primary windings (2) for an electric circuit that is to be monitored, and comprises a secondary winding (3), **characterised in that** the earth-leakage circuit-breaker or residual-current circuit-breaker (5) affected by pulsating and alternating current has means which cause relative permeability that is virtually independent of direct current pre-magnetisation over a wider range of field strength, for example a load impedance (4) connected in parallel to the secondary winding (3), and in that the means cause the earth-leakage circuit-breaker or residual-current circuit-breaker (5) affected by pulsating and alternating current to trigger at approximately identical induction deviations, regardless of the level of the d.c. fault current which can flow owing to the range of response of the residual-current circuit-breaker (6) affected by direct current.

2. Fault-current detection device according to claim 1, **characterised in that** the rated fault currents I_{Δn}∼ and I_{Δn}― for the two protective circuit-breakers (5, 6) can be set independently of each other, and in that means are provided for automatically matching the relative permeability of the earth-leakage circuit-breaker or residual-current circuit-breaker (5) affected by pulsating and alternating current with the two setting values for the rated fault currents I_{Δn}∼ and I_{Δn}―, for example a load impedance (4) connected in parallel to the secondary winding (3).

## Revendications

1. Dispositif de détection de courant de défaut comportant un disjoncteur à courant de défaut ou disjoncteur à courant différentiel (5) sensible aux courants pulsatoire et alternatif, et un disjoncteur à courant différentiel (6) sensible au courant continu, le disjoncteur à courant de défaut ou disjoncteur à courant différentiel (5) sensible aux courants pulsatoire et alternatif comportant un dispositif (1) de transformateur de courant totalisateur ayant au moins deux enroulements primaires (2) pour un circuit électrique à surveiller, et un enroulement secondaire (3), caractérisé par le fait que le disjoncteur à courant de défaut ou disjoncteur à courant différentiel (5) sensible aux courants pulsatoire et alternatif comporte des moyens, qui donnent une perméabilité relative pratiquement indépendante de prémagnétisations dues au courant continu sur une plage d'intensité de champ assez large, par exemple une charge (4), qui est branchée en parallèle avec l'enroulement secondaire (3), et que les moyens font que le déclenchement du disjoncteur à courant de défaut ou du disjoncteur à courant différentiel (5) sensible aux courants pulsatoire et alternatif s'effectue à des amplitudes d'induction sensiblement identiques, indépendamment de l'intensité du courant continu de défaut qui peut circuler en raison de la plage de réponse du disjoncteur à courant différentiel (6) sensible au courant continu.

2. Dispositif de détection de courant de défaut selon la revendication 1, caractérisé par le fait que les courants nominaux I_{Δn}∼ et I_{Δn}- de défaut pour les deux disjoncteurs (5, 6) sont réglables indépendamment l'un de l'autre, et que des moyens sont prévus pour adapter automatiquement la perméabilité relative du disjoncteur à courant de défaut ou disjoncteur à courant différentiel (5) sensible aux courants pulsatoire et alternatif aux deux valeurs de réglage pour les courants nominaux I_{Δn}∼ et I_{Δn}- de défaut, par exemple une charge (4), qui est branchée en parallèle avec l'enroulement secondaire (3).
